# FASCICULE DE BREVET EUROPEEN

(11) **EP 0 808 575 B1**
(45) Date de publication et mention de la délivrance du brevet: **10.04.2002**
(21) Numéro de dépôt: 96201352.0
(22) Date de dépôt: 21.05.1996
(51) Int. Cl.: A23C 3/04, A23C 9/152

(54) **Produit concentré congelé à base de lait et procedé de fabrication**
Gefrorenes konzentriertes Milchprodukt und Verfahren zu dessen Herstellung
Frozen concentrated milk product and process for preparing

(43) Date de publication de la demande: 26.11.1997
(73) Titulaire: SOCIETE DES PRODUITS NESTLE S.A., 1800 Vevey (CH)
(72) Inventeur: Fayard, Gilles, 1052 Le Mont S/Lausanne (CH); Groux, Michel John Arthur, 3438 Lauperswil (CH)
(74) Mandataire: Archambault, Jean

(56) Documents cités:
- WO-A-92/11769
- AU-A- 433 847
- US-A- 2 412 203
- US-A- 2 860 988
- US-A- 3 210 201
- US-A- 4 542 035

## Description

L'invention se rapporte à un procédé de fabrication d'un produit concentré congelé à base de lait susceptible d'être utilisé tel quel comme ingrédient pour la confection d'aliments ou pour reconstituer une boisson lactée ou un "milk shake" par addition d'eau.

US-A-2 412 203 concerne un procédé de conservation de produits laitiers qui comprend l'écrémage du lait entier, la pasteurisation de la crème, la pasteurisation et la concentration séparée du lait écrémé, le mélange et l'homogénéisation du lait écrémé et de la crème, son refroidissement à la température ambiante et finalement la surgélation rapide du mélange.

AU-A-433 847 se rapporte à un procédé de surgélation rapide de lait concentré qui consiste à le refroidir d'abord lentement jusqu'à +5° C, à le refroidir ensuite rapidement jusqu'à -5° C tout en l'aérant et enfin à le surgeler à basse température. Il est indiqué que le fait d'y incorporer de l'air empêche la caséine de s'aggréger et de précipiter.

US-A-2 860 988 décrit un procédé de préparation de lait concentré congelé qui comprend le refroidissement "flash" de lait entier concentré, homogénéisé et pasteurisé et sa congélation "slush" dans un échangeur à surface raclée, c'est à dire en freezer classique.

US-A-3 210 201 se rapporte à un procédé destiné à améliorer la stabilité à l'entreposage à l'état congelé d'un produit laitier concentré, basé sur l'addition d'un sel abaisseur de point de congélation au produit laitier avant de le congeler et sur l'entreposage du produit à une température à laquelle la cristallisation du lactose est inhibée.

US-A-4 542 035 a trait à un procédé de stabilisation d'une mousse dessert congelée qui consiste à y incorporer un électrolyte de qualité alimentaire contenant un cation multivalent, principalement le calcium, dont le rôle est de créer des ponts entre les protéines et d'agir ainsi comme stabilisant. La congélation du mix a lieu en freezer classique.

Jusqu'à présent, il n'a pas été possible de congeler du lait évaporé ou concentré sous forme homogène, c'est à dire sans qu'il n'y ait la séparation de phases que
l'on observe dans le procédé de cryoconcentration. De plus, il n'a pas été possible de congeler un concentré à base de lait sous une forme susceptible de redonner un produit dilué homogène à la reconstitution avec l'eau. L'invention se propose de pallier les insuffisances des procédés connus.

L'invention concerne donc un procédé de préparation d'un produit concentré congelé à base de lait, caractérisé par le fait que l'on refroidit une matière première lactique contenant 20 à 40 % de matière sèche, exempte de stabilisant ou d'émulsifiant ajouté, jusqu'à une température égale ou inférieure à -8° C en la faisant passer en continu dans un dispositif unique constitué d'au moins une vis sans fin tournant dans un fourreau.

Le produit obtenu n'est pas stabilisé par adjonction d'un agent stabilisant ou émulsifiant et se présente sous forme d'un concentré stable dont la décongélation conduit à un liquide homogène.

Dans le contexte de l'invention, on entend par "produit concentré à base de lait" un concentré obtenu par élimination d'eau à partir d'une matière première choisie parmi le lait entier, le lait plus ou moins écrémé, la crème, un produit équivalent à un lait écrémé tel que le babeurre et leurs mélanges, un lait fermenté, un lait acidifié, une crème acide, un produit du genre des yaourts, une sauce, une soupe.

Un produit préparé selon l'invention peut être sucré ou salé. Il peut être aromatisé et contenir des arômes ou des épices, par exemple des arômes culinaires, de fruit, de café ou de cacao.

La concentration peut avoir lieu par tout moyen, par exemple par cryoconcentration, évaporation osmotique, microfiltration, ultrafiltration avec dilution ou, par exemple par évaporation classique.
Dans un mode de réalisation particulier, le produit congelé concentré contient un gaz incorporé, par exemple de l'air, c'est à dire qu'il est foisonné.

Il peut être utilisé directement, notamment comme décor dans un dessert réfrigéré ou dans un article de confiserie glacée. Dans cette application, il est particulièrement avantageux que le produit puisse être formé à la sortie de la filière d'extrusion, soit stable et garde sa forme pendant un laps de temps suffisant pour pouvoir être servi sans affaissement ni déformation, par exemple lors de sa consommation.

Dans le cas particulier des articles de confiserie glacée, cette mise en forme peut être réalisée par moulage dans un contenant ou par extrusion par exemple avec une filière d'extrusion mobile, reproduisant les décors réalisés habituellement par le pâtissier avec une douille décoreuse. La stabilité de forme obtenue peut être mise à profit pour réaliser des décors, qui ne se déforment pas lors du processus de fabrication, notamment lors du conditionnement, ni lors de l'entreposage.

Une fois dilué avec l'eau, un produit aéré selon l'invention peut se présenter sous la forme d'un "milk shake" contenant une mousse stable.

Selon un mode de réalisation préféré du procédé, on fait passer la matière première dans un dispositif muni de deux vis sans fin, parallèles, tournant dans le même sens.

Selon un mode de réalisation particulier, destiné à produire un concentré congelé pour boisson moussante du genre "milk shake", on injecte un gaz, par exemple de l'air, dans le fourreau en quantité telle que l'on obtienne 20 à 150 % et de préférence 80 à 100 % de foisonnement.

Pour mettre en oeuvre le procédé, on part de lait, entier ou écrémé, frais ou reconstitué à partir de poudre et le cas échéant de crème ou d'huile de beurre. On le pasteurise, le refroidit, puis, après préchauffage, on le concentre par évaporation. On peut homogénéiser le concentrat, de préférence à chaud dans des conditions poussées permettant une réduction de la taille moyenne des globules gras autour de 8-20 micron. On peut, le cas échéant, ajouter au concentrat du sucre et des arômes au moyen d'un mélangeur. Après refroidissement à basse température, de préférence à 2-7° C, on introduit le mélange dans un dispositif de congélation, de préférence bi-vis, par exemple tel qu'illustré dans le dessin ci-après, dans lequel il est malaxé par les vis co-rotatives tournant à vitesse élevée, préférablement à 100-600 tour/min, et le cas échéant acheminé vers une zône d'injection de gaz, par exemple d'air ou il est foisonné à 20-150 %, fortement refroidi, jusqu'à -8 à - 20° C, puis forcé à travers une filière.

Le travail dans le dispositif bi-vis s'effectue de manière surprenante sans cisaillement excessif, de sorte que la montée en pression n'excède pas environ 50 bar au niveau de la filière. Le produit sortant est caractérisé par un diamètre moyen des cristaux de glace allant de 10 à 40 micron, ce qui est notablement plus bas que ce que l'on peut obtenir avec les freezers conventionnels, ainsi que par une taille moyenne des globules gras autour de 8-20 micron. Il en résulte une texture améliorée dans le sens d'une meilleure onctuosité et d'une meilleure crémosité.

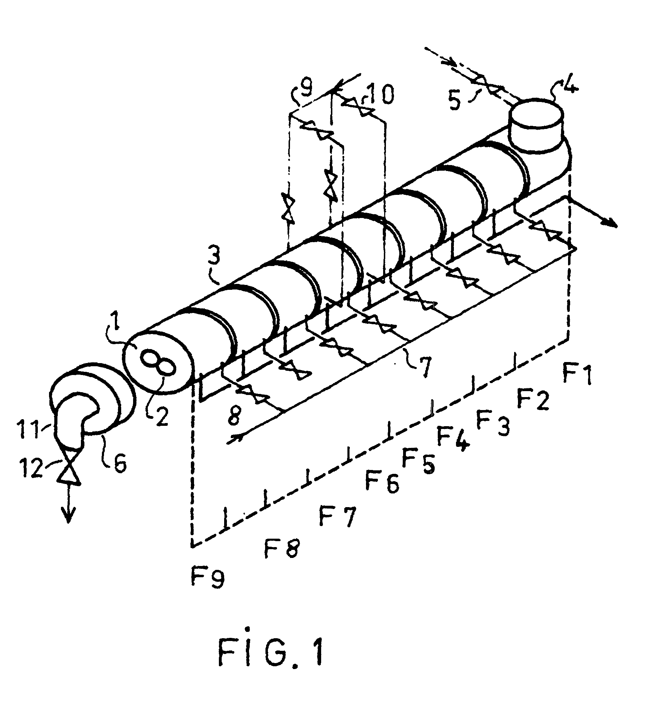

Un dispositif pour la mise en oeuvre du procédé est illustré au dessin annexé, donné à titre d'exemple non limitatif, dont la figure 1 est une vue schématique en perspective éclatée.

A la figure 1, le dispositif comprend deux vis sans fin, 1 et 2 identiques et parallèles s'engrenant l'une dans l'autre et tournant dans le même sens, entraînées par un moteur non représenté. Les vis 1 et 2 sont placées dans un fourreau 3, qui présente à l'une de ses extrémités un conduit d'alimentation 4 en mélange à congeler pourvu d'une vanne de non retour 5 pour assurer l'étanchéité vis à vis de l'air et à l'autre d'une filière 6 sous forme de plaque.

Le cas échéant, dans une zone intermédiaire, le dispositif comporte des moyens d'alimentation en air.

Les deux vis sans fin peuvent présenter des segments F1 à F9 successifs où la forme des vis varie d'un segment à l'autre, par exemple du point de vue de l'orientation des filets et de leur pas. La configuration des vis est disposée pour effectuer les opérations de transport, mélange, cisaillement et compression de la masse vers la filière et pour favoriser, le cas échéant, l'incorporation de gaz de manière à obtenir un bon foisonnement. On peut prévoir des zones intermédiaires de brassage, par exemple par des disques monolobes ou bilobes à orientation positive, ayant un effet de transport ou négative, ayant un effet de retour ou encore un segment à pas de vis inverse induisant un retour.

Le fourreau 3 est pourvu de moyens de refroidissement constitués d'une double enveloppe où circulent des fluides frigorigènes.

Les moyens de refroidissement comportent, de préférence, un circuit de refroidissement autonome 7 par segment, avec vannes 8 de contrôle du débit d'agent frigorigène, par exemple un mélange eau-alcool, ce qui permet une régulation individuelle de chaque segment en température. Les vis peuvent également être refroidies de manière contrôlée, par exemple au moyen d'un circuit de fluide frigorigène qui peut être contrôlé de manière autonome.

Le gaz, par exemple l'air, peut être injecté au moyen de débimètres par des conduits 9 à différents niveaux du fourreau 3, et de préférence dans la seconde moitié de sa longueur, préférablement de chaque côté de celui-ci. Le débit d'air peut être réglé individuellement par des vannes 10. On peut atteindre ainsi, de préférence, 80 à 150 % de foisonnement.

La filière est, de préférence, en forme d'un contre-cône, dont le rôle est de réunir les espaces entourant chaque vis en un seul orifice de sortie. Elle peut être à sortie horizontale ou verticale. La géométrie et le dimensionnement de la filière ou, le cas échéant, le diamètre et la longueur du conduit de sortie qui peut lui être associé sont prévus pour assurer une contre-pression de l'ordre de 4 à 50 bar et, de préférence de 4 à 25 bar. On peut régler la contre-pression au moyen, par exemple, d'une soupape à bille en aval du conduit en question, par exemple dans le cas d'une température de sortie du produit proche de la limite basse, auquel cas le diamètre du conduit de sortie doit être augmenté pour compenser la chute de pression due à la perte de charge provoquée par l'augmentation de la viscosité lorsque la température de la masse baisse. La filière peut, de préférence, être refroidie, par exemple au moyen d'un manchon où circule un fluide de refroidissement.

L'invention concerne également l'utilisation d'un produit congelé non aéré obtenu comme indiqué précédemment pour fabriquer un produit laitier liquide
Ou en poudre. L'invention est décrite plus en détails dans les exemples ci-après donnés à titre d'illustration. Les pourcentages et parties y sont en poids, sauf indication contraire.

### Exemple 1

On pasteurise un lait écrémé, puis on l'introduit à 25° C dans un évaporateur où on le concentre à 30 % de matière sèche.
On introduit ce concentrat dans un dispositif d'extrusion bi-vis dont le fourreau comporte neuf segments F1 à F9 de 100 mm de longueur, auxquels sont associés des circuits de refroidissement individuels parcourus par un mélange eau-alcool. De l'air peut être introduit de chaque côté du fourreau par piston muni d'un débimètre massique.
Les conditions opératoires sont indiquées ci-après:
- Configuration des vis 1 et 2

| | | | | | | | |
|---|---|---|---|---|---|---|---|
| Segments | F1 | F2 | F3 | F4 | F5 | F6-F7 | F8-F9 |
| Type de vis | T | T | T | M/C | T | CO | CO |

Avec T: Transport, M: Mélange, C: Cisaillement et CO: Compression
- Sans injection d'air.
- Débit/température du concentrat: 10 kg/h en F1/5° C
- Vitesse de rotation des vis: 400 t/min
- Diamètre de la filière (sans conduit ni soupape de sortie): 1, 2 mm,
- Température dans les segments de fourreau et la plaque de filière:

| | | | | |
|---|---|---|---|---|
| Segments | F1-F2 | F3 | F4-F9 | Plaque |
| Température (° C) | +3 à +5 | -8,5 | -10 à -11 | -8 à -10 |

La température de la masse à la sortie de la filière est -9 C.

Le produit obtenu a une texture onctueuse et crèmeuse, ce qui n'est pas le cas lorsque l'on traite le même concentrat dans un freezer conventionnel. Il montre une bonne stabilité à la congélation avec un minimum de rétreint.

Son comportement à la fusion est également différent, il fond beaucoup plus lentement. En bouche il procure une sensation beaucoup moins froide. Le concentrat congelé est parfaitement homogène, sans séparation de phases solide/liquide et peut être entreposé sans altération à -18° C. Lorsqu'il est pris à -18° C et mis à la température ambiante, le concentré congelé garde sa forme pendant au moins 30 min., alors qu'un même produit traité en freezer conventionnel se liquéfie entiérement en moins de 15 min. De plus, le produit est stable aux variations de température.

Cette stabilité physique intéressante peut être mise à profit pour entreposer un concentré de lait évaporé en attendant de le traiter ultérieurement pour fabriquer des produits laitiers. En effet, il n'est plus nécessaire d'adapter strictement la charge de l'évaporateur, qui est en général un appareil de grande capacité de mise en marche et de fonctionnement lourd, à la quantité de produit laitier final, ce qui entraîne une meilleure productivité.

### Exemple 2

On procède comme à l'exemple 1, mais avec un lait entier à 4 % de matière grasse que l'on concentre par évaporation à 30 % de matière sèche. Les propriétés remarquables observées par rapport à un produit traité en freezer conventionnel sont maintenues.

### Exemple 3

On procède de la même manière que dans l'exemple 2, sauf que l'on ajoute 3-5 % de saccharose au concentrat ainsi qu'un arôme de fruit avant le traitement dans l'extrudeur. Les propriétés précédentes décrites à l'exemple 1 sont maintenues. A la reconstitution avec 1 à 2 fois la quantité d'eau, on obtient un lait aromatisé.

### Exemple 4

On procède comme à l'exemple 3, à la différence près que l'on introduit de l'air dans l'extrudeur, de chaque côté du fourreau, à environ la moitié de la longeur de celui-ci avec un débit total de 20 g/h. On obtient ainsi un concentré congelé foisonné à 100 % (augmentation de volume par rapport à la masse non aérée).

En ajoutant 0,5 à 2 fois la quantité d'eau, on obtient un "milk shake" fruité.

### Exemple 5

On procède comme à l'exemple 2, aux différences près que l'on ajoute 10 % de cacao instantané (Nesquik (R)) au concentrat avant passage dans l'extrudeur et que l'on introduit de l'air de chaque côté du fourreau et environ à la moitié de la longeur du fourreau de l'extrudeur avec un débit total de 15 g/h. On obtient ainsi un concentré congelé foisonné à 100 % .

En ajoutant 0,5 à 2 fois la quantité d'eau, on obtient un milk shake au cacao.

Dans les concentrés congelés précédents, les diamètres moyens des cristaux de glace mesuré par microscopie optique à -10° C au grossissement 1000-1500 (Dc, micron) obtenus sont:

| Exemple | 2 | 5 |
|---|---|---|
| Dc | <30 | 34 |

Dans tous les cas, les produits obtenus ont une texture plus onctueuse et plus crémeuse que les produits fabriqués avec un freezer de manière conventionnelle.

## Revendications

1. Procédé de preparation d'un produit concentré congelé à base de lait, **caractérisé par le fait que** l'on refroidit une matière première lactique contenant 20 à 40 % de matière sèche, exempte de stabilisant ou d'émulsifiant ajouté, jusqu'à une température égale ou inférieure à -8° C en la faisant passer en continu dans un dispositif unique muni de moyens de refroidissement et d'au moins une vis sans fin tournant dans un fourreau.

2. Procédé selon la revendication 1, **caractérisé par le fait que** l'on introduit la matière première à environ 2-7° C dans un dispositif bi-vis, dans lequel elle est malaxée par les vis co-rotatives tournant à 100-600 tour/min, acheminée vers une zône d'injection de gaz où elle est foisonnée à 20-150 %, fortement refroidie, jusqu'à -8 à -20° C, puis forcée à travers une filière.

3. Produit congelé obtenu par la mise en oeuvre du procédé selon la revendication 1 ou 2, **caractérisé par** un diamètre moyen des cristaux de glace allant de 10 à 40 micron.

4. Utilisation différée d'un produit congelé non aéré selon la revendication 3, pour fabriquer un produit laitier liquide ou en poudre.

## Patentansprüche

1. Verfahren zur Herstellung eines tiefgefrorenen konzentrierten Produkts auf Milchbasis, **dadurch gekennzeichnet, dass** man ein Milchausgangsmaterial, das 20 bis 40 % Trockenmasse enthält und frei von zugefügtem Stabilisator oder Emulgator ist, bis zu einer Temperatur von gleich -8°C oder darunter kühlt, indem man es kontinierlich durch eine einzige Vorrichtung leitet, die mit Kühlmitteln und mit mindestens einer sich in einem Gehäuse drehenden Schnecke ausgerüstet ist.

2. Verfahren nach Anspruch 1, **dadurch gekennzeichnet, dass** man das Ausgangsmaterial mit etwa 2-7°C in eine Zweischneckenvorrichtung einführt, in der es durch die Schnecken, die sich mit 100-600 U/min gleichsinnig drehen, gemischt wird, zu einem Gaseinspritzbereich befördert wird, in dem sein Volumen um 20-150% vergrößert wird, stark gekühlt wird, und zwar bis -8 bis -20°C, und dann durch eine Düse gepresst wird.

3. In dem Verfahren nach Anspruch 1 oder 2 erhaltenes tiefgefrorenes Produkt, **gekennzeichnet durch** einen mittleren Durchmesser der Eiskristalle von 10 bis 40 µ.

4. Verwendung eines tiefgefrorenen, nicht belüfteten Produkts nach Anspruch 3 für die spätere Herstellung eines flüssigen oder pulverförmigen Milchprodukts.

## Claims

1. Process for preparing a frozen milk-based concentrated product, **characterized in that** a lactic starting material containing 20% to 40% solids, which is free of added stabilizer or emulsifier, is cooled to a temperature of less than or equal to -8°C by passing it continuously through a single device equipped with cooling means and at least one endless screw rotating in a barrel.

2. Process according to Claim 1, **characterized in that** the starting material is introduced at about 2-7°C into a twin-screw device, in which it is blended by the co-rotating screws rotating at 100-600 rpm, conveyed to a zone for injecting gases, where it is overrun to 20-150%, cooled considerably, down to -8 to -20°C, and then forced through a die.

3. Frozen product obtained by carrying out the process according to Claim 1 or 2, **characterized by** a mean ice crystal diameter ranging from 10 to 40 microns.

4. Use of a non-aerated frozen product according to claim 3 for the deferred manufacture of a liquid or powdered milk product.
